# EUROPÄISCHE PATENTSCHRIFT

(11) **EP 0 731 286 B1**
(45) Veröffentlichungstag und Bekanntmachung des Hinweises auf die Patenterteilung: **08.07.1998**
(21) Anmeldenummer: 96100484.3
(22) Anmeldetag: 15.01.1996
(51) Int. Cl.: F16D 55/2255, B61H 5/00

(54) **Scheibenbremse für Fahrzeuge, insbesondere Schienenfahrzeuge**
Disc brake for vehicles, especially rail vehicles
Frein à disque pour véhicules, notamment véhicules ferroviaires

(30) Priorität: 07.03.1995 DE 19508034
(43) Veröffentlichungstag der Anmeldung: 11.09.1996
(73) Patentinhaber: KNORR-BREMSE Systeme für Schienenfahrzeuge GmbH, 80809 München (DE)
(72) Erfinder: Elstorpff, Marc, Dr., D-80637 München (DE); Staltmeir, Josef, D-80807 München (DE); Fuderer, Erich, D-82110 Germering (DE); Kerscher, Albert, D-85386 Eching (DE)

(56) Entgegenhaltungen:
- EP-A- 0 067 371
- PATENT ABSTRACTS OF JAPAN vol. 007, no. 041 (M-194), 18.Februar 1983 & JP-A-57 190133 (AKEBONO BRAKE KOGYO KK), 22.November 1982,

## Beschreibung

Die Erfindung bezieht sich auf eine Scheibenbremse für Fahrzeuge, insbesondere Schienenfahrzeuge, gemäß dem Oberbegriff des Anspruchs 1.

Derartige Scheibenbremsen sind in unterschiedlichen Ausführungen bekannt, beispielsweise mit einer den Reibring beidseitig beaufschlagenden Bremszange, die der Anordnung nach der EP-A-0499971 oder der Ausgestaltung nach der DE-A-44 31 321 entsprechen kann, wobei die Bremszange mittels Pendel- oder Lenkerhebel oder in sonstiger Weise an einem festen Rahmenteil oder an einem festen Bremsgehäuse oder dergl. gelagert ist, als Sattelbremse mit den Reibring und gegebenenfalls einen Tragkörper für diesen axial übergreifendem, fest oder axialverschieblich gelagertem und gegebenenfals einen Übersetzungshebel beinhaltendem Bremssattel oder andersartiger Bauart.

Bei diesen Scheibenbremsen treten bei Bremsungen zwischen der Reibfläche und der Bremsbacke, die einen vermittels des Drucklagers am Betätigungsorgan, gegebenenfalls einem Bremszangen- oder Übersetzungshebel angelenkten Belagträger und einen an diesem gehalterten Bremsbelag aufweisen kann, in Radialrichtung des Reibringes gesehen unterschiedliche, nach radialaußen ansteigende Reibgeschwindigkeiten auf, welche zu entsprechend unterschiedlichem Verschleiß führen können. Ein in radialer Richtung unterschiedlicher Verschleiß der Bremsbacken ist unerwünscht, er führt zum Schrägverschleiß mit Schrägstellungen der Bremsbacken relativ zur Reibfläche, so daß die Bremsbacken vorzeitig, sobald sie einseitig - zumeist radialaußen - ein Verschleißgrenzmaß erreicht haben, trotz andersseitig noch vorhandenem Verschleißvolumen ausgetauscht werden müssen.

Zum Vermeiden dieses Schrägverschleißes ist es bekannt, das Drucklager in Radialrichtung derart anzuordnen, daß hinsichtlich des Verschleißes die radial unterschiedlichen Reibgeschwindigkeiten durch unterschiedliche Reibpressungen möglichst weitgehend kompensiert werden. Das Drucklager befindet sich bei dieser hinsichtlich des Schrägverschleißes optimalen Anordnung zumeist etwas vom Reibmittelpunkt der Bremsbacke radial entfernt, seine Lage kann berechnet oder durch Versuche ermittelt werden. Bedingt durch unterschiedliche Betriebsweisen der Scheibenbremsen oder sonstige Einflüsse kann jedoch trotz dieser optimalen Anordnung Schrägverschleiß mit seinen negativen Folgen auftreten. Es sind auch Anordnungen zur einen Schrägverschleiß ausschließenden Zwangsführung der Bremsbacken bekannt, hierzu dienen beispielsweise breite Hängelaschenaufhängungen der Bremsbacken wie Z.B aus EP-A-0 067 371 bekannt oder Parallelogrammführungen für die Bremsbacken. Diese Anordnungen erfordern jedoch beachtlichen, zusätzlichen Bauaufwand und/oder zusätzlichen, oftmals nicht zur Verfügung stehenden Bauraum.

Es ist Aufgabe der Erfindung, mit einfachen, nur geringen Zusatzaufwand erfordernden Mitteln eine Scheibenbremse der eingangs genannten Art derart auszubilden, daß kein radialer Schrägverschleiß auftritt, wobei axiale Versetzungen der Reibfläche, wie sie bei Schienenfahrzeugen mit axialverschieblichen Radsätzen auftreten, keine Störungen bewirken. Weiterhin soll die Möglichkeit für eine derartige Ausbildung geboten sein, daß praktisch kein oder nur wenig zusätzlicher und zudem anderweitig kaum nutzbarer Bauraum beansprucht wird.

Diese Aufgabe wird nach der Erfindung durch die Merkmale des kennzeichen den Teiles des Anspruchs 1 gelöst.

Die Unteransprüche zeigen vorteilhafte, weitere Ausbildungsmöglichkeiten der Scheibenbremse nach der Erfindung auf: So ist eine Ausbildung nach Unteranspruch 4 zweckmäßig, falls sich der Reibring beispielsweise infolge unterschiedlicher, seitlicher Fahrzeugeinfederungen aus seiner Normallage schrägstellen kann: Infolge der Elastizität des Lenkerhebels vermag die Bremsbacke den Schrägstellungen der Reibfläche leicht und zwangsfrei zu folgen. Eine Ausbildung nach Unteranspruch 6 ergibt eine besonders teilesparende und damit kostengünstige und nach Unteranspruch 7 hinsichtlich des erforderlichen Bauraumes besonders vorteilhafte Scheibenbremse. Der Unteranspruch 8 zeigt eine Bauform auf, bei welcher bei zwangsweiser Bogenführung des Drucklagers durch einen Zangenhebel einer Bremszange oder eines Übersetzungshebeltriebs eine exakte, einen Schrägverschleiß ausschließende Parallelführung von Brembacken relativ zur Reibfläche erreichbar ist.

In der Zeichnung sind besonders vorteilhafte Ausführungsbeispiele für nach der Erfindung ausgestaltete Scheibenbremsen dargestellt, und zwar zeigt
- Fig.1: ein Scheibenbremse mit Bremszange bei unverschlissenen Bremsbacken und
- Fig.2: bei verschlissenen Bremsbacken;
- Fig.3: eine hinsichtlich der Teile der Kulissenführung vertauschte Ausführung als Radscheibenbremse eines Schienenfahrzeuges;
- Fig.4: eine Doppelanordnung für beidseitig wirkende Scheibenbremsen und
- Fig.5: eine Ausführung mit nur einseitiger Kulissenbahn.

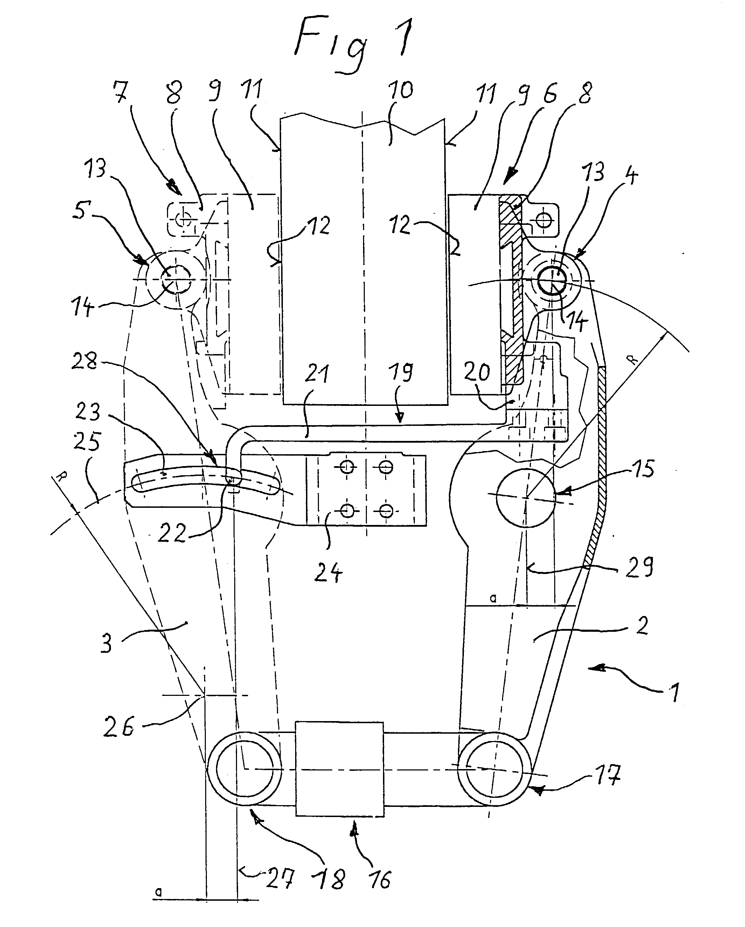

In Fig.1 ist eine Scheibenbremse mit einer Bremszange 1 dargestellt, welche zwei Zangenhebel 2 und 3 aufweist; da die Erfindung im wesentlich in Verbindung mit Zangenhebel 2 erläutert wird, ist Zangenhebel 3 mitsamt den diesem zugeordneten Teilen nur gestrichelt angedeutet. Die einen Enden der Zangenhebel 2 und 3 sind vermittels Drucklager 4 bzw. 5 an Bremsbacken 6 bzw. 7 angelenkt, welche jeweils aus einem die Anlenkung aufweisenden Belagträger 8 und einem an diesem austauschbar gehalterten Bremsbelag 9 zusammengesetzt sind. Zwischen die beiden Bremsbacken 6,7 bzw. deren Bremsbeläge 9 greift ein Reibring 10 ein, welche auf einer nicht dargestellten, durch die Scheibenbremse abzubremsenden Welle sitzt. Der Reibring 10 weist beidseitig je eine in einer Radialeben 11 liegende, ringförmige Reibfläche 12 auf, an welche bei Bremsvorgängen die Bremsbacke 6 bzw. 7 mit ihrem jeweiligen Bremsbelag 9 axial anpreßbar ist.

Jedes Drucklager 4,5 ist als Drehlager mit einer Bolzen 13 ausgeführt, um dessen zumindest annähernd parallel zur Wirkrichtung der während Bremsungen auf die Bremsbacke 6,7 vom Reibring 10 ausgeübten Reibkraft, also etwa parallel zur Umfangsrichtung des Reibringes 10 im Bereich des Reibzentrums der Bremsbacke 6,7, verlaufende Achse 14 begrenzte Relativdrehungen der Bremsbacke 6,7 zum ein Betätigungsorgan für die Bremsbacke 6,7 zu deren Anpressen an die Reibfläche 12 darstellenden Zangenhebel 2,3 möglich sind. Die Zangenhebel 2,3 sind in ihren mittleren Bereichen mittels Anlenkungen 15 mit zum Drucklager 4 paralleler Achsrichtung an einem nicht dargestellten, im wesentlichen raumfesten Teil, beispielsweise einem Bremsgehäuse gemäß der eingangs erwähnten DE-Anmeldung P 44 31 321, einer Zugstange oder dergleichen, drehbar angelenkt, diese Anlenkung 15 ist nur hinsichtlich des Zangenhebels 2 dargestellt. Bremsbackenabgewandt sind die Zangenhebel 2,3 an den Enden eines üblichen, schwimmend gehalterten Bremskraftmotors 16, insbesondere Bremszylinders mit integriertem Verschleißnachsteller, vermittels Anlenkungen 17,18 mit ebenfalls zu den Drucklagern 4,5 paralleler Achsrichtung drehbar angelenkt.

Am Belagträger 8 der Bremsbacke 6 ist ein Lenkerhebel 19 fest gehaltert, der einen im wesentlichen vom Belagträger 8 nach radialaußen, bezogen auf den Reibring 10, ausgehenden, ersten Abschnitt 20 und einen zweiten, etwa rechtwinklig an diesen angesetzten und den Reibring 10 radialaußen übergreifenden Abschnitt 21 aufweist. Ein kurzes, nochmals nach redialaußen abgekröpftes, bremsbackenabgewandtes Endstück des Lenkerhebels 19 trägt zum Bilden einer Kulissenführung 28 einen Kulissenstein 22, der in eine schlitzartige Kulissenbahn 23 eingreift und in dieser verschieblich geführt ist. Die Kulissenbahn 23 befindet sich an einem im wesentlichen raumfest gehaltenen Teil 24, das fest am vorstehend im Zusammenhang mit der Lagerstelle 15 bereits erwähnten, im wesentlichen raumfesten Teil, also beispielsweise einem Bremsgehäuse oder einer Zugstange oder dergleichen, gehaltert sein kann. Der Kulissenstein 22 kann bolzen- oder rollenartig, beispielsweise als Wälzlager, ausgebildet sein.

Die Kulissenbahn 23 verläuft bogenartig, ihre Achse 25 ist ein Abschnitt eines Kreisbogens, dessen Radius R zumindest im wesentlichen gleich ist dem Abstand des Drucklagers 4 von der Anlenkung 15: Der Radius der Bewegungsbahn, der die Achse 14 des Drucklagers 4 beim Schwenken des Zangenhebels 2 um die Achse der Anlenkung 15 folgt, weist also ebenfalls die Größe von R auf. Der Krümmungsmittelpunkt 26 der Kulissenbahn 23 liegt reibringabgewandt in einem Abstand a zu einer durch die Eingriffsstelle der Kulissenführung 28 gehenden, zur Radialebene 11 parallelen Ebene 27, der zumindest annähernd gleichgroß ist zum Abstand a des Drucklagers 4 bzw. dessen Achse von einer ebenfalls zur Radialebene 11 parallelen Ebene 29, die die Anlenkstelle 15 bzw. deren Achse beinhaltet.

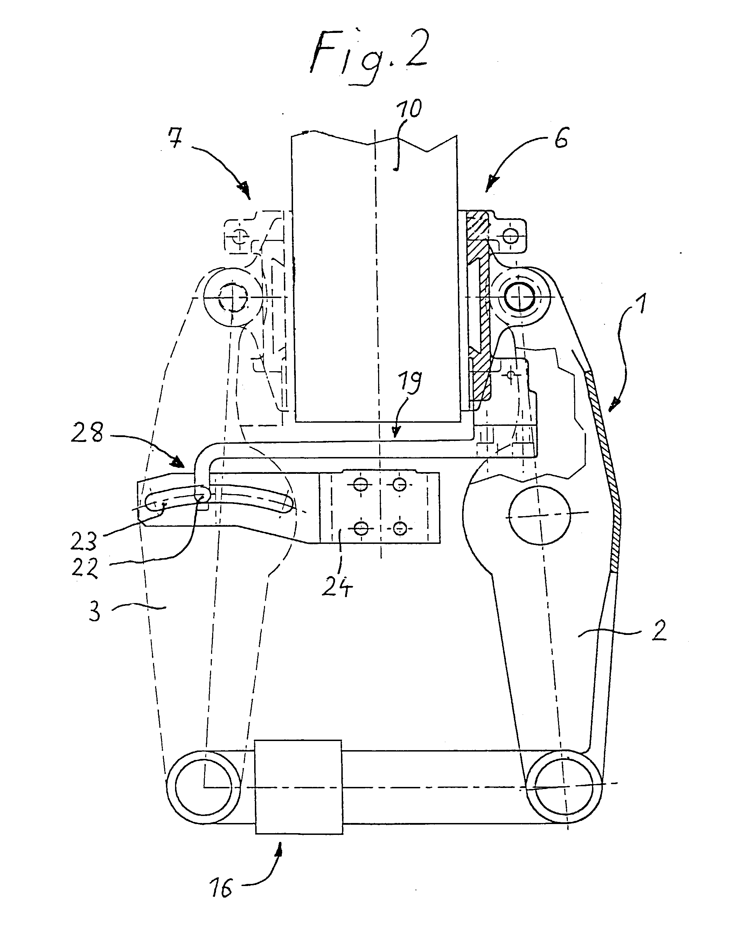

Es ist erkennbar, daß bei Bewegungen der Bremsbacke 6 vermittels des Zangenhebels 2 diese durch den Lenkerhebel 19 stets parallel zur Radial- bzw. Reibfläche 11 bzw. 12 geführt wird, ein radialer Schrägverschleiß der Bremsbacke 6 bzw. deren Bremsbelages 9 also ausgeschlossen ist. Aus Fig. 2, welche die Scheibenbremse mit voll verschlissenen Bremsbacken 6,7 bzw Bremsbelägen 9 zeigt, ist dies ebenfalls ersichtlich; in Fig.2 sind zur Erläuterung einige der Fig.1 entsprechende Bezugszahlen eingetragen. Auch bei einem axialen Verschieben des Reibringes 10 bleibt die Parallelführung der Bremsbacke 6 voll erhalten. Die Bremsbacke 6 bzw. deren Bremsbelag 9 verschleißt somit in radialer Richtung zum Reibring 10 gesehen zwangsweise gleichförmig, das Verschleißgrenzmaß wird über die ganze radiale Breite der Bremsbacke 6 gleichzeitig erreicht und beim Austausch der Bremsbacke 6 bzw. deren Bremsbelages 9 steht kein unverbrauchtes Verschleißvolumen mehr zur Verfügung. Die Bremsbacke 6 bzw. deren Bremsbelag werden somit optimal ausgenutzt, wodurch sich lange Betriebszeiten ohne Austauscharbeiten und ein dementsprechend niedriger Wartungsaufwand ergeben.

Die Kulissenführung 28 für die Bremsbacke 6 befindet sich im wesentlichen in einem Raumbereich, der sich nach radialaußen an die andere Bremsbacke 7 anschließt. Dieser Raumbereich liegt innerhalb der Bremszange 1, er ist daher praktisch stets frei von anderen Bauteilen; zudem ergibt sich bei dieser Anordnung eine axial zum Reibring 10 große Länge für den Lenkerhebel 19 und dementsprechend gute Parallelführung der Bremsbacke 6. In Abändereung hierzu ist es natürlich auch möglich, die Kulissenführung räumlich an anderer Stelle anzuordnen, wesentlich ist lediglich, daß sie in Achsrichtung des Reibringes 10 zum Drucklager 4 versetzt ist.

Eine dem vorstehend beschriebenen Ausführungsbeispiel entsprechende Anordnung ist bei Scheibenbremsen vorteilhaft, bei welchen anstelle einer Bremszange lediglich ein Übersetzungshebel vorgesehen ist, der mittels eines Drucklagers an einer Bremsbacke angelenkt ist, wie es insbesondere bei Sattelbremsen der Fall sein kann. Bei üblichen Scheibenbremsen mit zwei Bremsbacken, insbesondere Zangenbremsen der in Fig.1 angedeuteten Art, ist es selbstverständlich zweckmäßig, beide Bremsbacken 6 und 7 mit je einer Kulissenführung 28 auszustatten.

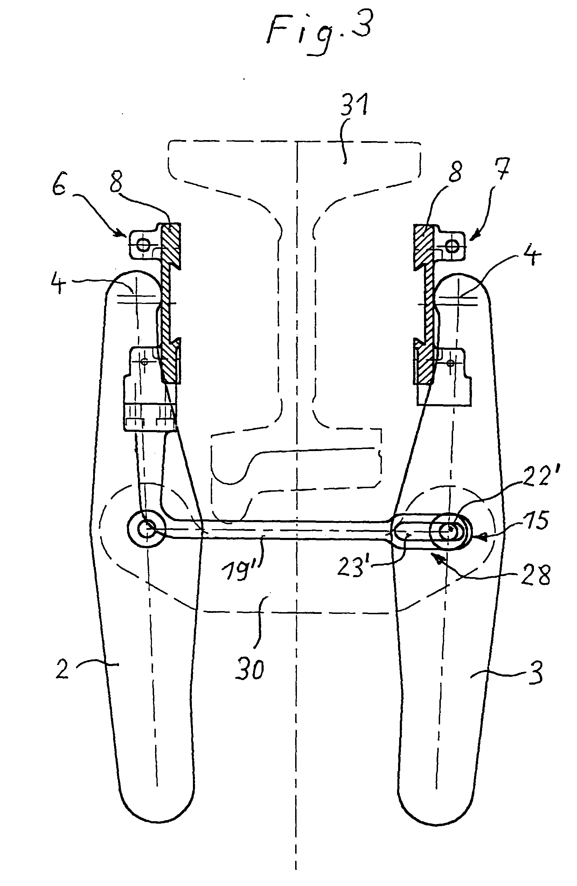

In Abänderung zum vorstehend beschriebenen Ausführungsbeispiel ist es selbstverständlich möglich, wie in der nur hier wesentliche Teile der Scheibenbremse zeigenden Fig.3 dargestellt, an der Kulissenführung 28 die Kulissenführungsorgane zu vertauschen: Nach Fig.3 ist der Kulissenstein 22' am als zunindest annähernd raumfesten Teil, als welches hier ein der Anlenkung 15 des Zangenhebels 3 zugehörender Lagerbolzen dient, als Verlängerung dieses Lagerbolzens ausgebildet und die Kulissenbahn 23' befindet sich am bremsbackenfernen Endbereich des Lenkerhebels 19'. Weiterhin ist in Fig.3 eine Zugstange 30 für die Bremszange 1 angedeutet, welche ebenso wie der Lenkerhebel 19' ein Schienenfahrzeugrad 31 radialaußen übergreift; das Schienenfahrzeugrad 31 ist in seinem Scheibenbereich mit üblichen, nicht dargestellten Reibringen versehen, an welche die nicht dargestellten Reibbeläge der Belagträger 8 der Bremsbacken 6,7 anpreßbar sind. Das Schienenfahrzeugrad 31 stellt hier einen Tragkörper für die Reibringe dar. Auch hier ist selbstverständlich eine Kulissenführung 28 für beide Belagträger 8 vorteilhaft.

Weiterhin zeigt die Fig.3, daß die Kulisenbahn 23' bei einer Zangenbremse mit Bogenführung des Drucklagers 4 geradlinig, parallel zur Achsrichtung des Reibringes verlaufend, ausgeführt werden kann. Bei vereinfachter Fertigung ist wird mit in der Praxis ausreichender Genauigkeit ein Schrägverschleiß vermieden, es ist ein praktisch vollständiges Ausnutzen des Verschleißvolumens möglich.

Eine geradlinige Kulissenbahn entsprechend der Kulissenbahn 23' der Fig.3 ist stets vorzusehen, wenn die Bremsbacke geradlinig, zumindest annähernd im rechten Winkel zur Reibfläche geführt, an diese anpreßbar ist, der Radius der Bewegungsbahn des Drucklagers also gegen unendlich tendiert. Dies ist insbesondere bei Sattelbremsen mit einem den Reibring überkreuzenden Bremssattel der Fall.

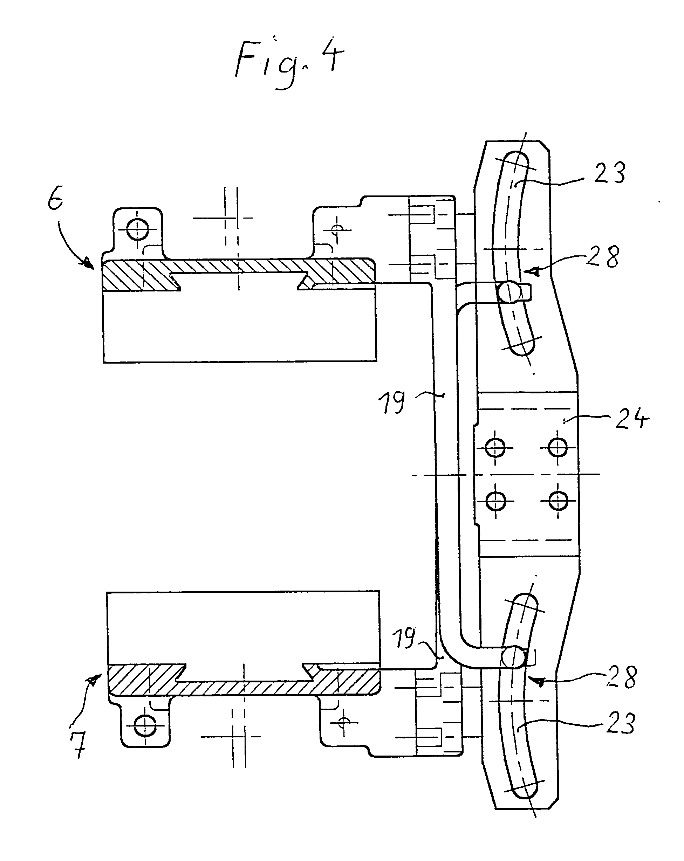

Die Fig.4 zeigt, daß bei einer Scheibenbremse mit beidseitig einen nicht dargestellten Reibring beaufschlagenden Bremsbacken 6,7, welche beide vermittels Lenkerhebel 19 von je einer Kulissenführung 28 geführt sind, die im wesentlichen raumfest gehalterten Kulissenführungsorgane, hier die Kulissenbahnen 23, an einem ihnen gemeinsamen Teil 24 angeordnet sein können, welches wie zu Fig.1 beschrieben seinerseits raumfest zu haltern ist.

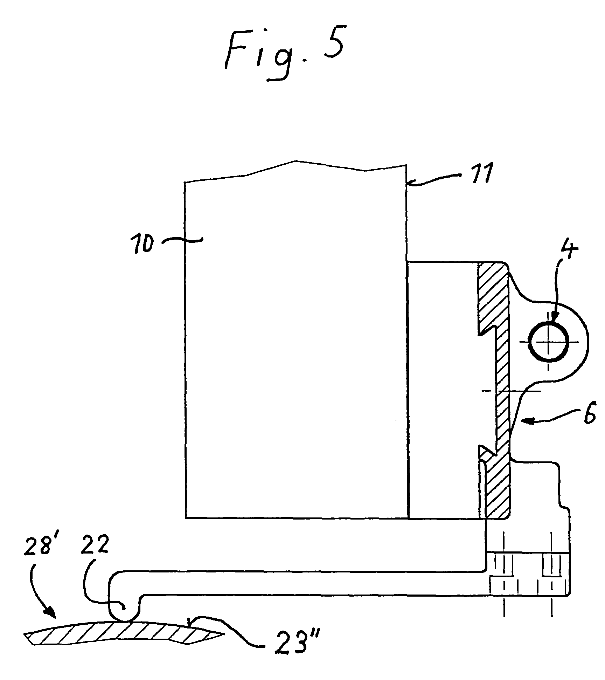

Nach Fig.5 ist ein vereinfachen der Kulissenführung 28' durch nur einseitige Ausbildung der Kulissenbahn 23'' für den Kulissenstein 22 möglich. Das Drucklager 4 ist gemäß Fig.5, bezogen auf den Reibring 10, in radialer Richtung zu versetzen, so daß es einen Abstand zu seiner Lage hat, die bei einer Auslegung der eingangs für bekannte Scheibenbremsen geschilderten Art hinsichtlich des radialen Schrägverschleißes optimal wäre; vereinfacht und angenähert kann auch ein entsprechender Abstand in radialer Richtung vom Reibungsmittelpunkt der Bremsbacke 6 vorgesehen werden. Durch die außermittige Anpressung der Bremsbacke 6 an den Reibring 10 bewirkt die Anpreßkraft ein auf die Bremsbacke 6 um das Drucklager 4 wirkendes Drehmoment, welches zu einem das Drehmoment kompensierenden Andrücken des Kulissensteines 22 an die einseitige Kulissenbahn 23'' führt, welche hierzu auf der hinsichtlich der Richtung des Abstandes, also der Versatzrichtung des Drucklagers 4, entgegengesetzten Seite des Kulissensteines 22 anzuordnen ist. Auch diese Ausführung schließt einen Schrägverschleiß der Bremsbacke 6 aus. Selbstverständlich kann auch diese vereinfachte Ausführung für beide Bremsbacken 6 einer beidseitigen Scheibenbremse genutzt werden.

### Kurzfassung:

Die insbesondere für Schienenfahrzeuge vorgesehene Scheibenbremse ist zum vermeiden eines radialen Schrägverschleißes zumindest einer Bremsbacke (6), die um eine etwa in Umfangsrichtung eines Reibringes (10) im Reibmittelpunkt verlaufende Achse eines Drucklagers (4) begrenzt schwenkbar ist, mit einer Kulissenführung (28) ausgestattet. Die Kulissenführung (28) ist mit Abstand zum Drucklager (4) angeordnet, wobei der Abstand zumindest eine parallel zur Achsrichtung des Reibringes (10) verlaufende Komponente aufweist. Die Kulissenbahn (23) und der Kulissenstein (22) sind auf ein im wesentlichen ortsfestes Teil (24) und vermittels eines Lenkerhebels (19) auf die Bremsbacke (6) verteilt gehaltert, die Kulissenbahn (23) verläuft im wesentlichen parallel zur Achsrichtung des Reibringes. Falls das Drucklager (4) z.B. durch einen Zangenhebel (2) auf einer Kreisbahn geführt ist, wird die Kulissenbahn (23) zweckmäßig gleichartig zur Kreisbahn gekrümmt ausgebildet.

### Aufstellung der Bezugszeichen.

- 1: Bremszange
- 3: Zangenhebel
- 5: Drucklager
- 7: Bremsbacke
- 9: Bremsbelag
- 11: Radialebene
- 13: Bolzen
- 15: Anlenkung
- 17: Anlenkung
- 19: Lenkerhebel
- 20: Abschnitt
- 22: Kulissenstein
- 23: Kulissenbahn
- 23": Kulissenbahn
- 25: Achse
- 27: Ebene
- 28': Kulissenführung
- 30: Zugstange

- R: Radius
- 2: Zangenhebel
- 4: Drucklager
- 6: Bremsbacke
- 8: Belagträger
- 10: Reibring
- 12: Reibfläche
- 14: Achse
- 16: Bremskraftmotor
- 18: Anlenkung
- 19': Lenkerhebel
- 21: Abschnitt
- 22': Kulissenstein
- 23': Kulisseilbahn
- 24: Teil
- 26: Krümmungsmittelpunkt
- 28: Kulissenführung
- 29: Ebene
- 31: Schienenfahrzeugrad

- a: Abstand

## Patentansprüche

1. Scheibenbremse für Fahrzeuge, insbesondere Schienenfahrzeuge, mit zumindest einer Bremsbacke (6), die an eine zumindest im wesentlichen in einer Radialebene (11) eines abzubremsenden Reibringes (10) liegende, ringförmige Reibfläche (12) im wesentlichen in Axialrichtung des Reibringes (10) vermittels eines Betätigungsorganes anpreßbar ist, wobei die Bremsbacke (6) und das Betätigungsorgan vermittels eines Relativdrehungen der Bremsbacke (6) zum Betätigungsorgan um eine etwa parallel zur auf die Bremsbacke (6) während Bremsungen vom Reibring (10) ausübbaren Reibkraft verlaufende Drehachse ermöglichenden Drucklagers (4) miteinander gekoppelt sind, und wobei an der Bremsbacke (6) ein Lenkerhebel (19, 19') fest gehaltert ist, dessen bremsbackenfernes Ende zumindest in Axialrichtung des Reibringes (10) zur Drehachse versetzt an einem zumindest annähernd raumfest gehaltenen Teil geführt ist dadurch gekennzeichnet, daß die Führung eine im wesentlichen rechtwinklig zur Radialebene (11) verlaufenden Kulissenführung (28,28') ist.

2. Scheibenbremse nach Anspruch 1, wobei die Bremsbacke (6) einen vermittels des Drucklagers (4) mit dem Betätigungsorgan gekoppelten Belagträger (8) und einen an diesem gehalterten Bremsbelag (9) aufweist, dadurch gekennzeichnet, daß der Lenkerhebel (19, 19') am Belagträger (8) gehaltert ist.

3. Scheibenbremse nach Anspruch 1 oder 2, dadurch gekennzeichnet, daß der Lenkerhebel (19,19') einen von der Bremsbacke (6) - bezogen auf den Reibring (10) - nach radialaußen auskragenden, ersten Abschnitt (20) und einen annähernd rechtwinklig zu diesem abgekröpften, etwa rechtwinklig zur Radialebene (11) verlaufenden, zweiten Abschnitt (21) aufweist, wobei der zweite Abschnitt (21) den Reibring (10) und einen gegebenenfalls vorhandenen Tragkörper für diesen radialaußen übergreift.

4. Scheibenbremse nach einem oder mehreren der vorstehenden Ansprüche, wobei der Reibring (10) aus seiner Normallage begrenzt schrägstellbar ist, dadurch gekennzeichnet, daß der Lenkerhebel (19,19') aus einem federelastischem Werkstoff besteht.

5. Scheibenbremse nach einem oder mehreren der vorstehenden Ansprüche, mit zwei den Reibring (10) beidseitig beaufschlagenden Bremsbacken (6 und 7), dadurch gekennzeichnet, daß an jeder der beiden Bremsbacken (6,7) ein in einer Kulissenführung (28) geführter Lenkerhebel (19) gehaltert ist.

6. Scheibenbremse nach Anspruch 5, dadurch gekennzeichnet, daß den Kulissenführungen (28) beider Lenkerhebel (19) ein gemeinsames, raumfest gehaltertes Teil (24) zugehört.

7. Scheibenbremse nach Anspruch 5 oder 6, dadurch gekennzeichnet, daß die einer Bremsbacke (6) zugeordnete Kulissenführung (28) sich im wesentlichen in einem radialaußen an die andere Bremsbacke (7) anschließenden Raumbereich befindet.

8. Scheibenbremse nach einem oder mehreren der vorstehenden Ansprüche, in Ausbildung als Zangenbremse mit zumindest einem Zangenhebel (2) als Betätigungsorgan, der in seiner Längsrichtung zum Drucklager (4) versetzt zum einen an einem im wesentlichen raumfest gehaltenen Teil, einer Zugstange (30) oder einem Bremsgehäuse bzw. -träger und zum anderen an einem Bremskraftmotor (16) angelenkt ist, dadurch gekennzeichnet, daß die Kulissenführung (28,28') eine zumindest annähernd kreisbogenartig gekrümmte Kulissenbahn (23,23'') aufweist, deren Krümmungsradius (R) wenigstens annähernd dem Abstand (a) des Drucklagers (4) von der einen Anlenkung (15) des Zangenhebels (2) am raumfest gehaltenen Teil, an der Zugstange (30) oder dem Bremsgehäuse bzw. -träger entspricht, wobei der Krümmungsmittelpunkt (26) sich reibringabgewandt befindet und zu einer durch die Eingriffsstelle der Kulissenführung (28,28') gehenden, zur Radialebene (11) parallelen Ebene (27) zumindest annähernd den gleichen Abstand (a) aufweist wie das Drucklager (4) zu einer die eine Anlenkung (15) beinhaltenden, ebenfalls zur Radialebene (11) parallelen Ebene (29).

9. Scheibenbremse nach einem oder mehreren der Ansprüche 1 bis 7, bei welcher die Bremsbacke durch das Betätigungsorgan eine im wesentlichen geradlinige Bewegung erfährt, insbesondere mit einem den Reibring übergreifenden Bremssattel, dadurch gekennzeichnet, daß die Kulissenführung (28) eine zur Bewegungsrichtung der Bremsbacke (6) parallel velaufende, geradlinige Kulissenbahn (23') aufweist.

10. Scheibenbremse nach einem oder mehreren der vorstehenden Ansprüche, dadurch gekennzeichnet, daß der Lenkerhebel (19) an seinem freien Ende einen Kulissenstein (22) trägt, der in eine schlitzartige Kulissenbahn (23) des raumfesten Teiles (24) eingreift.

11. Scheibenbremse nach einem oder mehreren der vorstehenden Ansprüche 1 bis 9, dadurch gekennzeichnet, daß das raumfeste Teil einen Kulissenstein (22') trägt, der in eine schlitzartige Kulissenbahn (23') am freien Ende des Lenkerhebels (19') eingreift.

12. Scheibenbremse nach den Ansprüchen 8 und 11, mit einer zwei Zangenhebel (2,3) und zwei Bremsbacken (6,7) aufweisenden Bremszange, dadurch gekennzeichnet, daß der der einen Bremsbacke (6) zugeordnete Kulissenstein (22') mit der Anlenkung (15) des der anderen Bremsbacke (7) zugeordneten Zangenhebels (3) am raumfest gehaltenen Teil, der Zugstange (30) oder dem Bremsgehäuse bzw. -träger kombiniert, insbesonder an einer Verlängerung eines Lagerbolzens, ausgebildet ist.

13. Scheibenbremse nach einem oder mehreren der vorstehenden Ansprüche 1 bis 9, dadurch gekennzeichnet, daß das Drucklager (4) relativ zu dessen minimalen Schrägverschleiß der Bremsbacke (6) bedingender Lage, die zumindest angenähert in einer den Reibungsmittelpunkt der Bremsbacke (6) enthaltenden Normalebene zur Radialebene (11) liegt, in Radialrichtung der Reibscheibe (10) versetzt angeordnet ist und daß eine nur einseitige Kulissenbahn (23'') vorgesehen ist, welche zur der Versetzungsrichtung des Drucklagers (4) entgegengesetzten Seite eines Kulissensteins (22) liegt.

## Claims

1. Disc brake for vehicles, especially rail vehicles, comprising at least one brake shoe (6) which is adapted for being pressed against an annular friction surface (12), which is essentially located in a radial plane (11) of a friction ring (10) to be braked, by means of an actuator substantially along the axial direction of said friction ring (10), with said brake shoe (6) and said actuator being linked to each other by means of a thrust bearing (4) permitting relative rotational movements of said brake shoe (6) relative to said actuator about an axis of rotation extending approximately in parallel with the friction force which said friction ring (10) can apply on said brake shoe (6) during brake application, and wherein a steering arm lever (19, 19') is fixedly supported on said brake shoe (6) and has an end distal of the brake shoe, which is offset relative to said axis of rotation and is guided on an element which is held stationary in space at least approximately,
characterized in that said guide is a connecting link guide (28, 28') which extends substantially orthogonally with respect to the radial plane (11).

2. Disc brake according to Claim 1, wherein said brake shoe (6) comprises a lining support (8) coupled to said actuator via said thrust bearing (4), and a brake lining (9) fixed on said lining support (8), characterized in that said steering arm lever (19, 19') is fixed on said lining support (8).

3. Disc brake according to Claim 1 or 2, characterized in that said steering arm lever (19, 19') comprises a first section (20) cantilevering from said brake shoe (6) - relative to said friction ring (10) - in a radially outward direction, and a second section (21) which extends approximately orthogonally relative to said radial plane, with said section (21) overlapping, on the radial outer side, said friction ring (10) and a supporting body possibly provided for said ring.

4. Disc brake according to one or several of the preceding claims, wherein said friction ring (10) is adapted to be inclined relative to its normal position to a limited degree, characterized in that said steering arm lever (19, 19') consists of a spring-elastic material.

5. Disc brake according to one or several of the preceding Claims, including two brake shoes (6 and 7) acting upon said friction ring (10) on either side, characterized in that one steering arm lever (19), which is guided in a connecting link guide (27), is fixed on each of said two brake shoes (6, 7).

6. Disc brake according to Claim 5, characterized in that a common element (24) fixed to be stationary in space is associated with the connecting link guides (28) of both steering arm levers (19).

7. Disc brake according to Claim 5 or 6, characterized in that the connecting link guide (28), which is associated with a brake shoe (6), is located substantially in a space segment radially outwardly joining the other brake shoe (7).

8. Disc brake according to one or several of the preceding claims, configured as calliper brake with at least one calliper lever (2) as actuator which is articulated, with an offset relative to said thrust bearing (4) in its longitudinal extension, on a part substantially held to be stationary in space, on a traction bar (30) or a brake housing or carrier, on the one hand, and on a brake force motor (16), on the other hand, characterized in that said connecting link guide (28, 28') is provided with a sliding path (23, 23") having an at least approximately arcuate curvature and a radius of curvature (R) corresponding, at least approximately, to the spacing (a) of said thrust bearing (4) from the first articulation (15) of said calliper lever (2) on said part held to be stationary in space, on said traction bar (30) or on said brake housing or carrier, with the centre of curvature (26) being arranged to be turned away from said friction ring and being spaced from a plane (27) parallel with said radial plane (11) passing through the point of engagement of said connecting link guide (28, 28') by at least approximately the same distance (a) as the distance between said thrust bearing (4) and a plane (29) equally parallel with said radial plane (11), which includes one articulation (15).

9. Disc brake according to one or several of the Claims 1 to 7, wherein the brake shoe is caused by said actuator to perform a substantially rectilinear movement, in particular with a calliper overlapping said friction ring, characterized in that said connecting link guide (28) comprises a rectilinear sliding path (23') extending in parallel with the direction of movement of said brake shoe (6).

10. Disc brake according to one or several of the preceding Claims, characterized in that the steering arm lever (19) carries a sliding block (22) on its free end, which engages in a slot-like sliding path (23) of said part (24) held stationary in space.

11. Disc brake according to one or several of the preceding Claims 1 to 9, characterized in that said part held stationary in space carries a sliding block (22') which engages in a slot-like sliding path (23') on the free end of said steering arm lever (19').

12. Disc brake according to the Claims 8 and 11, including a brake calliper comprising two calliper levers (2, 3) and two brake shoes (6, 7), characterized in that the sliding block (22') associated with the first one (6) of said brake shoes is configured in combination with the articulation (15) of the other calliper lever (3) associated with the other one (7) of said brake shoes, which is associated with said calliper lever (3) on said part held to be stationary in space, on said traction bar (30) or on said brake housing or carrier, particularly on an extension of a bearing pin.

13. Disc brake according to one or several of the preceding Claims 1 to 9, characterized in that said thrust bearing (4) is arranged at an offset in the radial direction of said friction disc (10), relative to its position inducing a minimum oblique wear on said brake shoe (6), which is located, at least approximately, in a plane orthogonal on said radial plane (11) and including the centre of friction of said brake shoe (6), and that an only one-sided sliding path (23") is provided which is located on that side of a sliding block (22) which is opposite to the direction of the offset of said thrust bearing (4).

## Revendications

1. Frein à disque pour véhicules, notamment véhicules sur rail, comprenant au moins une mâchoire (6) apte à être serrée contre une surface frottante (12) annulaire, qui se trouve essentiellement dans un plan radial (11) d'un anneau de friction (10) à freiner, moyennant un organe de commande essentiellement le long de la direction axial dudit anneau de friction (10), ladite mâchoire (6) et ledit organe de commande étant reliés l'un à l'autre moyennant palier de poussée (4) qui permet des mouvements rotatives relatives de ladite mâchoire (6) par rapport audit organe de commande autour d'un axe de rotation qui s'étend environ en parallèle à l'effort de frottement qui peut être appliqué par ledit anneau de friction (10) sur ladite mâchoire (6) au cours du freinage, et dans lequel un balancier du bras oscillant (19, 19') est fixé et porté sur ladite mâchoire (6) et comprend une extrémité distale de la mâchoire, qui est décalée par rapport audit axe de rotation en étant guidé sur un élément qui est stabilisé en espace au moins approximativement,
caractérisé en ce que ledit guide est un guide de coulisse (28, 28') qui s'étend essentiellement perpendiculairement sur le plan radial (11).

2. Frein à disque selon la revendication 1, dans lequel ladite mâchoire (6) comprend un élément porte-garniture (8) relié audit organe de commande via ledit palier de poussée (4), et une garniture de frein (9) fixée sur ledit élément porte-garniture (8), caractérisé en ce que ledit balancier du bras oscillant (19, 19') est fixé sur ledit élément porte-garniture (8).

3. Frein à disque selon la revendication 1 ou 2, caractérisé en ce que ledit balancier du bras oscillant (19, 19') comprend une première partie (20) en saillie de ladite mâchoire (6) - par rapport audit anneau de friction (10) - en un sens radialement vers l'extérieur, et une deuxième partie (21) qui s'étend environ perpendiculairement sur ledit plan radial, ladite partie (21) chevauchant, du côté radialement extérieur, ledit anneau de friction (10) et un corps porteur éventuellement disposé pour ledit anneau.

4. Frein à disque selon une ou plusieurs des revendications précédentes, dans lequel ledit anneau de friction (10) est apte à être incliné par rapport à sa position normale d'une importance limitée, caractérisé en ce que ledit balancier du bras oscillant (19, 19') consiste en un matériau qui fait ressort.

5. Frein à disque selon une ou plusieurs des revendications précédentes, comprenant deux mâchoires (6 and 7) qui agissent sur ledit anneau de friction (10) des deux côtés, caractérisé en ce qu'un balancier du bras oscillant (19), qui est guidé dans un guide de coulisse (27), est fixé sur chacune desdites deux mâchoires (6, 7).

6. Frein à disque selon la revendication 5, caractérisé en ce qu'un élément commun (24) fixé de façon stabilisée en espace est affecté auxdits guides de coulisse (28) des deux balanciers du bras oscillant (19).

7. Frein à disque selon la revendication 5 ou 6, caractérisé en ce que le guide de coulisse (28), qui est affecté à une mâchoire (6), se trouve essentiellement dans un segment d'espace qui se joigne à l'autre mâchoire (7) radialement vers l'extérieur.

8. Frein à disque selon une ou plusieurs des revendications précédentes, en une configuration d'un frein à mâchoires à au moins un balancier des mâchoires (2) comme organe de commande qui est articulé, en déport dudit palier de poussée (4) en sens longitudinal, sur un élément essentiellement stabilisé en espace, sur une barre de traction (30) ou un carter ou porteur de frein, d'un côté, et sur un moteur de l'effort de freinage (16), d'autre côté, caractérisé en ce que ledit guide de coulisse (28, 28') comprend une voie à coulisse (23, 23") à une courbure essentiellement en arc de cercle environ et à un rayon de courbure (R) en correspondance, au moins approximatiement, avec l'écart (a) dudit palier de poussée (4) de la première articulation (15) dudit balancier des mâchoires (2) sur l'élément stabilisé en espace, sur ladite barre de traction (30) ou sur ledit carter ou porteur de frein, le centre de courbure (26) étant disposé de façon qu'il soit détourné dudit anneau de friction et écarté d'un plan (27) en parallèle audit plan radial (11) qui passe par le point de prise dudit guide de coulisse (28, 28') par une distance (a) égale, au moins approximatevement, à l'écart entre ledit palier de poussée (4) et un plan (29) également en parallèle audit plan radial (11), qui comprend une articulation (15).

9. Frein à disque selon une ou plusieurs des revendications 1 à 7, dans lequel la mâchoire est causée par ledit organe de commande à réaliser un mouvement essentiellement rectiligne, en particulier à une mâchoire qui chevauche ledit anneau de friction, caractérisé en ce que ledit guide de coulisse (28) comprend une voie à coulisse (23') rectiligne qui s'étend en parallèle au sens du mouvement de ladite mâchoire (6).

10. Frein à disque selon une ou plusieurs des revendications précédentes, caractérisé en ce que le balancier du bras oscillant (19) porte un coulisseau (22) sur son extrémité libre, qui se trouve en prise dans une voie à coulisse (23) similaire à fente, dudit élément (24) stabilisé en espace.

11. Frein à disque selon une ou plusieurs des revendications 1 à 9, caractérisé en ce que ledit élément stabilisé en espace porte un coulisseau (22') qui se trouve en prise dans une voie à coulisse (23') similaire à une fente, sur l'extrémité libre dudit balancier du bras oscillant (19').

12. Frein à disque selon les revendications 8 et 11, comprenant un levier des mâchoires à deux balanciers des mâchoires (2, 3) et deux mâchoires (6, 7), caractérisé en ce que le coulisseau (22') affecté à la première (6) desdites mâchoires est configuré en combinaison avec l'articulation (15) de l'autre balancier des mâchoires (3) affecté à l'autre (7) desdites mâchoires, qui est affecté audit balancier des mâchoires (3) sur ledit élément stabilisé en espace, sur ladite barre de traction (30) ou sur ledit carter ou porteur de frein, en particulier sur un prolongement d'un boulon d'appui.

13. Frein à disque selon une ou plusieurs des revendications 1 à 9, caractérisé en ce que ledit palier de poussée (4) est disposé en déport, en sens radial de ladite disque frottante (10), relativement à sa position qui produit une usure minimale sur ladite mâchoire (6), qui est disposé, au moins approximativement, dans un plan perpendiculaire sur ledit plan radial (11) qui renferme centre de frottement de ladite mâchoire (6), et en ce qu'une voie à coulisse (23") seulement unilatérale est disposée sur ce côté d'un coulisseau (22) qui est opposé au sens du déport dudit palier de poussée (4).
